# EUROPÄISCHE PATENTANMELDUNG

(11) **EP 3 835 109 A1**
(43) Veröffentlichungstag der Anmeldung: **16.06.2021**
(21) Anmeldenummer: 19214676.9
(22) Anmeldetag: 10.12.2019
(51) Int. Cl.: B60L 9/00, B60L 50/53

(54) **ELEKTRISCHES FAHRZEUG, VERBUND AUS MEHREREN ELEKTRISCHEN FAHRZEUGEN UND VERFAHREN ZUM BETREIBEN EINES ELEKTRISCHEN FAHRZEUGS**

(71) Anmelder: Stadler Rail AG, 9565 Bussnang (CH)
(72) Erfinder: Tscheng, Jorgen, 8046 Zürich (CH)
(74) Vertreter: Hepp Wenger Ryffel AG

(57) **Zusammenfassung**

Die Erfindung betrifft ein elektrisches Fahrzeug, insbesondere ein Schienenfahrzeug, mit einer Stromaufnahmevorrichtung (2). Die Stromaufnahmevorrichtung weist mindestens eine Kontakteinrichtung (2a,2b) auf. Durch die Kontakteinrichtung (2a,2b) ist ein elektrisch leitender Kontakt der Stromaufnahmevorrichtung (2) zu einer externen Stromversorgung (1) erzielbar. Weiter umfasst das Fahrzeug einen Gleichstromzwischenkreis (11) und mindestens einen elektrischen Fahrmotor (10). Im normalen Fahrbetrieb ist der Strom von der Stromaufnahmevorrichtung (2) über den Gleichstromzwischenkreis (11) in die Fahrmotoren (10) leitbar und zwischen Kontakteinrichtung (2a,2b) und Gleichstromzwischenkreis (11) eine Stromverbindung ausgebildet. Die Stromverbindung ist zumindest teilweise bidirektional ausgebildet. Zwischen Kontakteinrichtung (2a,2b) und Gleichstromzwischenkreis (11) ist eine Trennvorrichtung (5) angeordnet. Die Trennvorrichtung (5) ist derartig ausgebildet, dass die Stromversorgung nur unidirektional unterbrechbar ist, insbesondere ein Stromfluss in Richtung externe Stromversorgung (1), bevorzugt in Richtung Kontakteinrichtung (2a,2b), unterbrechbar ist.

## Beschreibung

Die Erfindung betrifft ein elektrisches Fahrzeug, ein Verbund aus mehreren elektrischen Fahrzeugen und ein Verfahren zum Betreiben eines elektrischen Fahrzeugs.

Elektrisch betriebene Fahrzeuge wie Schienenfahrzeuge werden häufig durch ein externes Stromversorgungssystem wie einer Oberleitung mit Strom versorgt. Aus Gründen der Netzstabilität oder aus räumlichen Gründen sind solche Stromversorgungssysteme häufig in unabhängige Versorgungsabschnitte eingeteilt. Zwischen diesen unabhängigen Versorgungsabschnitten sind stromlose Abschnitte angeordnet, welche das Fahrzeug durchqueren muss. Dies hat den Nachteil, dass die Stromzufuhr zu den Hilfsbetrieben unterbrochen wird und so der Komfort für die Passagiere verringert wird. Weiter erfolgt so ein Lastabwurf der Traktion, was zu einer erhöhten Beanspruchung der Traktionskomponenten führt.

Aus EP 0 691 236 ist ein Verfahren zur Überbrückung von solchen Lücken in der Stromversorgung bekannt, bei dem das Fahrzeug in einen regenerativen Bremsbetrieb übergeht und so die Hilfsbetriebe mit Strom versorgt werden. Nachteil ist, dass das Fahrzeug abgebremst wird und dass durch den Lastwechsel die Traktionskomponenten stärker belastet werden.

Aus EP 2 011 685 ist eine Antriebssteuerung für ein Elektrofahrzeug bekannt, wobei bei einem solchen Unterbruch Batterien als Überbrückung verwendet werden. Die Stromabnahmeeinheit wird manuell oder durch ein externes Signal mittels eines Hauptschalters vom Stromversorgungssystem getrennt. Nachteil dieser Steuerung ist, dass langsam geschaltet wird und dass der Hauptschalter starkem Verschleiss unterliegt.

Die Aufgabe der Erfindung ist somit, diese und weitere Nachteile des Standes der Technik zu beheben und insbesondere zu verhindern, dass ein stromloser Abschnitt eines Stromversorgungssystems über einen Stromabnehmer des Fahrzeugs unter Strom gesetzt wird. Weiter soll eine Energieversorgung des Fahrzeugs auch in den stromlosen Abschnitten sichergestellt werden, ohne die Bestandteile des Fahrzeugs zu stark zu beanspruchen. Weiter sollen Inrush-Phänomene wie Lichtbögen verhindert werden.

Diese Aufgaben werden durch ein elektrisches Fahrzeug, ein Verbund aus mehreren elektrischen Fahrzeugen und ein Verfahren zum Betreiben eines elektrischen Fahrzeugs entsprechend dem Oberbegriff der unabhängigen Ansprüche gelöst.

Insbesondere wird die Aufgabe durch ein elektrisches Fahrzeug, insbesondere ein Schienenfahrzeug, mit einer Stromaufnahmevorrichtung gelöst. Die Stromaufnahmevorrichtung weist mindestens eine Kontakteinrichtung auf. Durch die Kontakteinrichtung ist ein elektrisch leitender Kontakt der Stromaufnahmevorrichtung zu einer externen Stromversorgung erzielbar. Das Schienenfahrzeug umfasst weiter einen Gleichstromzwischenkreis und mindestens einen elektrischen Fahrmotor. Im Fahrbetrieb ist der Strom von der Stromaufnahmevorrichtung über den Gleichstromzwischenkreis in die Fahrmotoren leitbar und zwischen Kontakteinrichtung und Gleichstromzwischenkreis eine Stromverbindung ausgebildet. Die Stromverbindung ist zumindest teilweise bidirektional ausgebildet. Zwischen Kontakteinrichtung und Gleichstromzwischenkreis ist eine Trennvorrichtung angeordnet. Die Trennvorrichtung ist derartig ausgebildet, dass die Stromversorgung nur unidirektional unterbrechbar ist, insbesondere ein Stromfluss in Richtung externe Stromversorgung, bevorzugt in Richtung Kontakteinrichtung, unterbrechbar ist.

Durch die nur unidirektional unterbrechbare Stromversorgung ist es möglich, dass das Fahrzeug jederzeit Strom von der externen Stromversorgung beziehen kann, jedoch wahlweise kein Strom aus dem Fahrzeug abfliessen kann. Beispielsweise kann so verhindert werden, dass Strom aus dem Gleichstromzwischenkreis in einen stromlosen Abschnitt der Stromversorgung abfliessen kann.
So kann verhindert werden, dass der stromlose Abschnitt ungewollt unter Strom gesetzt wird. Bei normalem Betrieb, also wenn der Gleichstromzwischenkreis von der externen Stromversorgung mit Strom versorgt wird, ist die Trennvorrichtung geschlossen und es kann Strom in die externe Stromversorgung eingespeist werden, beispielsweise bei regenerativem Bremsen.

Eine Trennvorrichtung wird hier als eine Vorrichtung verstanden, welche zumindest einen teilweisen Unterbruch der Stromverbindung ermöglicht, beispielsweise durch Reduzieren des Stromflusses. Bevorzugt ist die Trennvorrichtung so ausgelegt, dass die Stromverbindung vollständig trennbar ist, also kein Stromfluss vom Fahrzeug in den stromlosen Abschnitt mehr möglich ist.

Ein elektrisches Fahrzeug wird hier so verstanden, dass es sich um eine elektrisch fahrende Einheit handelt.

Die Stromaufnahmevorrichtung kann einen Stromabnehmer wie einen Stangenstromabnehmer, beispielsweise mit einem Schleifschuh oder mit einer Kontaktrolle, einen Stromabnehmerbügel zur Verbindung mit einer Stromschiene oder einer Oberleitung oder andere geeignete Abnahmevorrichtungen umfassen.

Das Fahrzeug kann weitere elektrische Komponenten umfassen, wie beispielsweise weitere Schalter oder Gleichrichter.

Vorzugsweise ist die Trennvorrichtung ein elektronischer Schalter, bevorzugt ein Halbleiterschalter mit Freilaufdiode, insbesondere bevorzugt ein IGBT mit Freilaufdiode.

Dieser Aufbau ist einfach herstellbar und wenig komplex.

Die Trennvorrichtung kann andere, geeignete Trennvorrichtungen umfassen, welche im geöffneten Zustand den Stromfluss vom Fahrzeug in die externe Stromversorgung unterbricht. Der Stromfluss in die Gegenrichtung sollte dabei immer noch möglich sein. Alternativ zu einer Trennvorrichtung, welche den Stromfluss komplett unterbricht, kann das Fahrzeug eine Reduziervorrichtung umfassen, welche beispielsweise während des stromlosen Abschnitts nur einen geringen Stromfluss in die externe Stromversorgung zulässt. So kann der Stromfluss in den stromlosen Abschnitt einfach verringert werden.

Vorzugsweise ist eine Stromspeichervorrichtung vorgesehen, insbesondere eine Batterie oder ein Kondensator, insbesondere ein Superkondensator. Die Stromspeichervorrichtung ist in elektrischer Verbindung zum Gleichstromzwischenkreis angeordnet. Bevorzugt ist die Stromspeichervorrichtung über einen Hochsetzsteller mit dem Gleichstromzwischenkreis verbunden.

So kann einfach sichergestellt werden, dass die Hilfsbetriebe und die Traktionsbetriebe mit Energie versorgt sind. Die Kapazität des Kondensators kann bevorzugt auf die benötigte Leistung der Fahrzeugs- und Hilfsbetriebsleistung und die Länge der stromlosen Abschnitte ausgelegt sein. Die Kapazität des Kondensators kann mindestens 1 kWh umfassen.

Vorzugsweise ist zwischen Kontakteinrichtung und Gleichstromzwischenkreis ein Hauptschalter angeordnet, bevorzugt zwischen Kontakteinrichtung und Trennvorrichtung, insbesondere bevorzugt zwischen Stromaufnahmevorrichtung und Trennvorrichtung.

Das erlaubt eine sichere Trennung des Fahrzeugs von der externen Stromversorgung. Die Kontakteinrichtung und der Hauptschalter sind verbunden. Allgemein wird hier Verbindung respektive verbunden verwendet, wenn zwischen den Komponenten eine stromleitende Leitungen vorhanden ist.
Das Fahrzeug kann weitere Schalter umfassen.

Vorzugsweise umfasst die Stromaufnahmevorrichtung eine Messvorrichtung für Strom.

So kann einfach festgestellt werden, ob die Trennvorrichtung betätigt werden muss oder nicht.

Bevorzugt umfasst das Fahrzeug eine Datenverarbeitungsvorrichtung zur Steuerung der Trennvorrichtung. Die Trennvorrichtung kann durch einen Benutzer betätigbar, insbesondere schaltbar, und/oder durch die Datenverarbeitungsvorrichtung automatisch betätigbar, insbesondere schaltbar, sein, bevorzugt durch Erkennen eines Messwerts der Messvorrichtung.

Umfasst das Fahrzeug mehr als eine Kontakteinrichtung, so ist die Messvorrichtung bevorzugt mit allen Kontakteinrichtungen verbunden, so dass Strom durch alle Kontakteinrichtungen messbar ist. Die Messvorrichtung umfasst dazu mindestens ein Messelement für jede Kontakteinrichtung, welche in Längsrichtung des Fahrzeugs von den anderen Kontakteinrichtungen beabstandet ist, so dass eine individuelle Messung des Stromes durch jede Kontakteinrichtung möglich ist. Wird der Strom seitlich von Stromschienen abgenommen, befinden sich meist zwei Kontakteinrichtungen rechts und links des Fahrzeuges, an im Wesentlichen derselben Stelle in Längsrichtung. Diese zwei Kontakteinrichtungen können mit einem gemeinsamen Messelement verbunden werden. So können individuelle Messungen für jede Kontakteinrichtung einfach und ohne unnötigen Materialaufwand vorgenommen werden. Die Stromaufnahmeeinrichtung kann so beispielsweise zwei Kontakteinrichtungen umfassen, durch welche gleichzeitig Strom fliessen kann. Das Unterbrechen der Stromversorgung findet nur statt, wenn die Länge des Abschnittes der externen Stromversorgung ohne Stromversorgung länger ist, als der Abstand zwischen den beiden Stromaufnahmevorrichtungen.
Vorzugsweise ist eine Detektionsvorrichtung zum Detektieren von Stromversorgungsunterbrüchen ausgebildet. Durch die Detektionsvorrichtung ist das Vorhandensein eines Stromversorgungsunterbruches direkt detektierbar und/oder Positionsdaten eines Stromversorgungsunterbruches sind in der Detektionsvorrichtung verarbeitbar.

So kann einfach festgestellt werden, wo stromlose Abschnitte im Stromversorgungsnetzwerk vorhanden sind und es kann frühzeitig darauf reagiert werden.

Die Detektionsvorrichtung kann mindestens eine Datenempfangsvorrichtung und/oder Datensendevorrichtung umfassen, welche dazu ausgelegt ist, Daten an andere Fahrzeuge oder von einer externen Datenverarbeitungsvorrichtung oder Netzwerks zu senden oder von diesen zu empfangen, bevorzugt Positionsdaten von stromlosen Abschnitten.

Die Detektionsvorrichtung kann bevorzugt mit der fahrzeuginternen Datenverarbeitungsvorrichtung verbunden und/oder verbindbar sein, so dass eine Schaltung der Trennvorrichtung entsprechend der empfangenen Daten ausführbar ist.

Die Aufgabe wird weiter durch einen Verbund aus mehreren elektrischen Fahrzeugen, insbesondere Schienenfahrzeugen, gelöst. Zumindest ein elektrisches Fahrzeug wie vorhergehend beschrieben ist vorgesehen.

Das erlaubt ein einfaches Erkennen von stromlosen Abschnitten. Das bzw. die vorweg fahrenden Fahrzeuge können die Positionsdaten an hinter her fahrende Fahrzeuge weiterleiten oder an eine externe Stelle. Dies erlaubt eine einfache Zusammenstellung eines Positionsplans von stromlosen Abschnitten.

Weiter wird die Aufgabe durch ein Verfahren zum Betreiben eines elektrischen Fahrzeugs insbesondere eines Fahrzeuges wie vorhergehend beschrieben, insbesondere beim Befahren von stromlosen Abschnitten einer externen Stromversorgung, gelöst. Das elektrische Fahrzeug umfasst einen Gleichstromzwischenkreis und eine Stromaufnahmevorrichtung. Das Verfahren umfasst die folgenden Schritte:
- Detektieren eines Stromunterbruches mit einer Detektionsvorrichtung,
- Unterbrechen der Stromversorgung in Richtung externe Stromversorgung durch Öffnen einer Trennvorrichtung, wobei eine Stromversorgung von der externen Stromversorgung zum Gleichstromzwischenkreis unidirektional weiterhin möglich ist.

So kann verhindert werden, dass der stromlose Abschnitt ungewollt unter Strom gesetzt wird.
Vorzugsweise wird, nach Detektieren des Stromunterbruches, ein Spannungsniveau des Gleichstromzwischenkreises auf ein gleiches oder höheres Spannungsniveau als das Spannungsniveau der externen Stromversorgung angehoben, insbesondere auf eine maximal zulässige Spannung der externen Stromversorgung.

Damit wird die Belastung von elektrischen Komponenten durch Ausgleichsströme wegen unterschiedlicher externer und DC-Zwischenkreisspannung vermieden. Zusätzlich können Einflüsse der elektromagnetischen Verträglichkeit reduziert werden.

Vorzugsweise wird ein Wiedereinsetzen der externen Stromversorgung durch die Detektionsvorrichtung detektiert. Insbesondere wird das Spannungsniveau im Gleichstromzwischenkreis nach Detektieren des Wiedereinsetzens der externen Stromversorgung reduziert, bevorzugt auf ein Niveau unterhalb des Spannungsniveaus der externen Stromversorgung und die Speisung des Zwischenkreises durch die Batterie bzw. die Rekuperierung wird unterbrochen. Insbesondere wird die Trennvorrichtung wieder geschlossen, so dass ein bidirektionaler Stromfluss möglich ist.

Das erlaubt einen belastungsarmen Übergang von einer internen Stromversorgung zu einer externen Stromversorgung. Um das Wiedereinsetzen der externen Stromversorgung zu detektieren, misst die Detektiervorrichtung die externe Spannung und insbesondere die Oberwellenanteile. Dies ist von Vorteil, da zu diesem Zeitpunkt wegen der höheren Spannung noch kein Strom in das Fahrzeug fliesst.

Vorzugsweise findet das Anheben des Spannungsniveaus im Gleichstromzwischenkreis durch Einspeisung von Bremsenergie der Traktionsmotoren und/oder durch Einspeisung von Energie aus einem Energiespeicher statt.

Das erlaubt einen optimierten Aufbau der Stromversorgung.

Vorzugsweise findet bei einem elektrischen Fahrzeug mit mehr als einer Stromabnahmevorrichtung die Detektion des Stromunterbruches an der in Fahrtrichtung zuvorderst angeordneten Stromabnahmevorrichtung statt.

Das erlaubt eine frühzeitige Detektion von stromlosen Abschnitten. Dies ist beispielsweise möglich durch den Rückgang eines durch eine erste Kontakteinrichtung aufgenommenen Stroms, insbesondere im Vergleich zu einem durch eine zweite Kontakteinrichtung aufgenommenen Strom.

Vorzugsweise wird eine Länge des Abschnittes des Stromunterbruches der externen Stromversorgung bestimmt.

So kann der Schaltzeitpunkt der Trennvorrichtung einfach festgelegt werden.

Vorzugsweise umfasst ein Verbund wie vorhergehend beschrieben zumindest zwei in Längsrichtung beabstandete Stromaufnahmevorrichtungen. Das Unterbrechen der Stromversorgung findet nur statt, wenn die Länge des Abschnittes der externen Stromversorgung ohne Stromversorgung länger ist, als der Abstand zwischen den beiden Stromaufnahmevorrichtungen.

Dadurch wird unnötiges Schalten des Trennschalters einfach verhindert und somit unnötige Belastungen der Fahrzeugkomponenten verhindert.

Vorzugsweise wird die Länge des Abschnittes des Stromunterbruches der externen Stromversorgung an ein weiteres Fahrzeug gesendet und/oder gespeichert.

So kann einfach ein Positionsplan von stromlosen Abschnitten erstellt werden, wodurch eine Optimierung der Schaltung der Trennvorrichtung ermöglicht wird. Wenn beispielsweise ein erstes Fahrzeug einen stromlosen Abschnitt durchfährt und dieser überbrückbar ist, also immer mindestens an einem Punkt mit einem stromführenden Abschnitt der externen Stromversorgung verbunden ist, so kann das zweite, hinterher fahrende Fahrzeug eine Schaltung der Trennvorrichtung vermeiden.

Weiter wird die Aufgabe durch ein Computerprogrammprodukt gelöst. Das Computerprogrammprodukt umfasst die Befehle, welche bei Ausführung des Programms durch eine Datenverarbeitungsvorrichtung ein Verfahren wie vorhergehend beschrieben durchführt.

Die Erfindung wird anhand nachfolgender Figuren beispielhaft erklärt. Es zeigt
- Figur 1:: Ein Plan einer elektrischen Stromversorgung eines Fahrzeugs in einer ersten Ausführungsform,
- Figur 2:: Ein Plan einer elektrischen Stromversorgung eines Fahrzeugs in einer zweiten Ausführungsform.

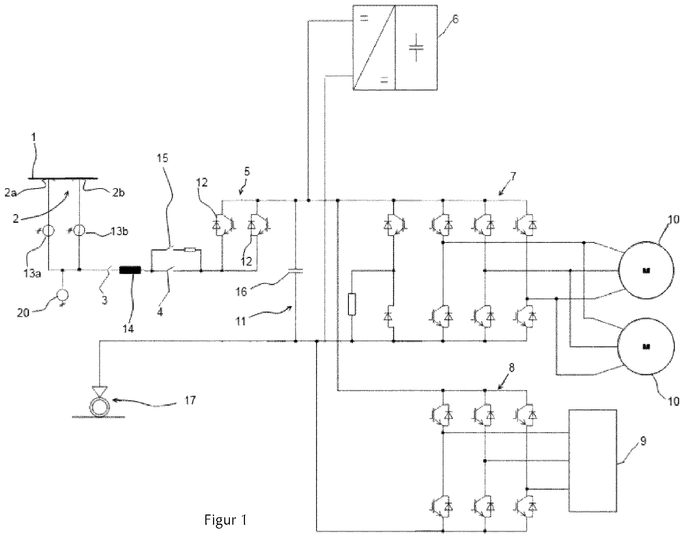

Figur 1 zeigt einen Plan einer elektrischen Stromversorgung eines Fahrzeugs in einer ersten Ausführungsform. Zu sehen ist eine Stromaufnahmevorrichtung 2 mit zwei Kontakteinrichtungen 2a, 2b, welche das Fahrzeug mit einer externen Stromversorgung 1 in einen elektrisch leitenden Kontakt bringen.

Die Kontakteinrichtungen 2a, 2b sind mit jeweils einem Stromwandler 13a, 13b zur Strommessung verbunden. Allgemein wird hier Verbindung respektive verbunden so ausgelegt, dass zwischen Komponenten eine stromleitende Leitung angeordnet ist.

Die beiden Stromwandler 13a, 13b sind mit einem Hauptschalter 3 verbunden. An der Leitung vom Stromwandler 13a zum Hauptschalter 4 ist ein zusätzlicher Spannungswandler 20 angeordnet.

Der Hauptschalter 3 ist mit einer Induktivität 14 verbunden, welche wiederum mit einem Linienschütz 4 und einem dazu parallelgeschalteten Ladeschütz 15 verbunden ist. Das Linienschütz 4 und das Ladeschütz 15 sind mit der Trennvorrichtung 5 verbunden. Die Trennvorrichtung 5 umfasst in dieser Ausführungsform zwei parallelgeschaltete Freilaufdioden 12.
In einer alternativen Ausführungsform (hier nicht gezeigt) können die beiden Stromwandler 13a, 13b direkt oder über eine Sicherung mit der Induktivität 14 verbunden sein.

Die Trennvorrichtung 5 ist mit dem Gleichstromzwischenkreis 11 verbunden. Der Gleichstromzwischenkreis 11 umfasst einen Kondensator 16. Eine Energiespeichervorrichtung, hier Kapazität 6, ist parallel zum Gleichstromzwischenkreis 11 geschaltet und über einen Hochsetzsteller 21 mit diesem verbunden. Die Kapazität 6 kann die Stromversorgung des Gleichstromzwischenkreises 11 übernehmen oder über diesen aufgeladen werden.

Weiter zu sehen sind zwei Traktionsmotoren 10 und Hilfsbetriebe 9. Die Traktionsmotoren 10 sind über einen Motorstromrichter 7 mit dem Gleichstromzwischenkreis 11 verbunden. Die Hilfsbetriebe 9 sind über Hilfsbetriebeumrichter 8 ebenfalls mit dem Gleichstromzwischenkreis 11 verbunden.

Bei normalem Betrieb wird Strom von der externen Stromversorgung 1 über die Stromaufnahmevorrichtung 2 und den Gleichstromzwischenkreis 11 zu den Motoren 10 und den Hilfsbetrieben 9 geleitet. In diesem Fall ist die Trennvorrichtung 5 geschlossen, was eine Leitung des Stroms von der Stromaufnahmevorrichtung 2 in den Gleichstromzwischenkreis 11 und umgekehrt erlaubt. Fährt das Fahrzeug nun in einen stromlosen Abschnitt ein, wird die Trennvorrichtung 5 geöffnet, wodurch kein Strom aus dem Gleichspannungszwischenkreis 11 in die externe Stromversorgung 1 abfliessen kann. Es ist jedoch immer noch möglich, dass Strom aus der externen Stromversorgung 1 in den Gleichstromzwischenkreis 11 hineinfliesst. Somit ist die Verbindung zwischen Gleichstromzwischenkreis 11 und der externen Stromversorgung 1 unidirektional unterbrochen. Die Motoren 10 und die Hilfsbetriebe 9 werden durch die Kapazität 6 über den Gleichstromzwischenkreis 11 mit Strom versorgt.

Nach dem Durchfahren des stromlosen Abschnitts wird die Trennvorrichtung 5 wieder geschlossen, Strom kann nun wieder bidirektional fliessen. Die Kapazität 6 wird über den Gleichstromzwischenkreis wieder aufgeladen.

Weiter ist eine Erdbürste 17 für den Rückstrom gezeigt.

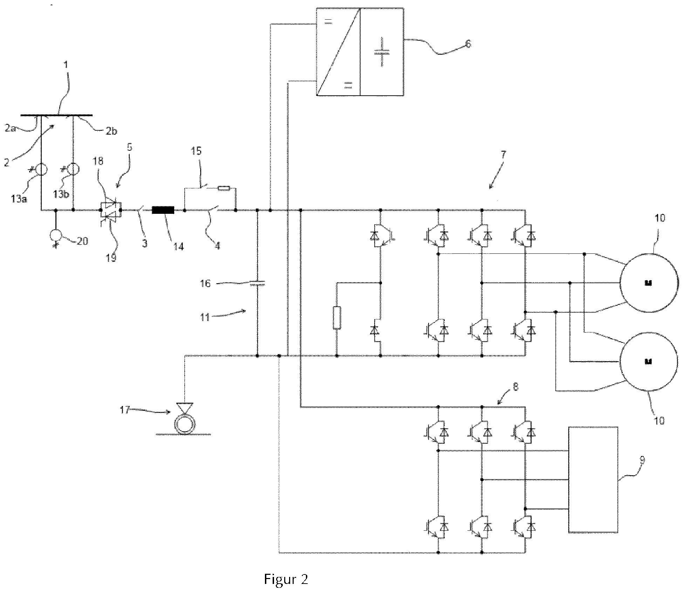

Figur 2 zeigt einen Plan einer elektrischen Stromversorgung eines Fahrzeugs in einer zweiten Ausführungsform. Hier werden nur die Unterschiede zur ersten Ausführungsform erläutert.

Die Trennvorrichtung 5 in dieser Ausführungsform ist zwischen den Stromwandlern 13a, 13b und dem Hauptschalter 3 angeordnet. Die Trennvorrichtung umfasst hier eine Freilaufdiode 18, die mit einem IGBT-Schalter parallelgeschaltet ist.

## Patentansprüche

1. Elektrisches Fahrzeug, insbesondere ein Schienenfahrzeug, mit einer Stromaufnahmevorrichtung (2) aufweisend mindestens eine Kontakteinrichtung (2a,2b), wobei durch die Kontakteinrichtung (2a,2b) ein elektrisch leitender Kontakt der Stromaufnahmevorrichtung (2) zu einer externen Stromversorgung (1) erzielbar ist, einem Gleichstromzwischenkreis (11) und mindestens einem elektrischen Fahrmotor (10), wobei im Fahrbetrieb der Strom von der Stromaufnahmevorrichtung (2) über den Gleichstromzwischenkreis (11) in die Fahrmotoren (10) leitbar ist und zwischen Kontakteinrichtung (2a,2b) und Gleichstromzwischenkreis (11) eine Stromverbindung ausgebildet ist, wobei die Stromverbindung zumindest teilweise bidirektional ausgebildet ist, **dadurch gekennzeichnet, dass** zwischen Kontakteinrichtung (2a,2b) und Gleichstromzwischenkreis (11) eine Trennvorrichtung (5) angeordnet ist, wobei die Trennvorrichtung (5) derartig ausgebildet ist, dass die Stromversorgung nur unidirektional unterbrechbar ist, insbesondere ein Stromfluss in Richtung externe Stromversorgung (1), bevorzugt in Richtung Kontakteinrichtung (2a,2b), unterbrechbar ist.

2. Elektrisches Fahrzeug nach Anspruch 1, **dadurch gekennzeichnet, dass** die Trennvorrichtung (5) ein elektronischer Schalter, bevorzugt ein Halbleiterschalter mit Freilaufdiode (18), insbesondere ein IGBT (19) mit Freilaufdiode (18), ist.

3. Elektrisches Fahrzeug nach einem der vorhergehenden Ansprüche, **dadurch gekennzeichnet, dass** eine Energiespeichervorrichtung (6) vorgesehen ist, insbesondere eine Batterie oder ein Kondensator, insbesondere ein Superkondensator, und die Stromspeichervorrichtung (6) in elektrischer Verbindung zum Gleichstromzwischenkreis (11) angeordnet ist, wobei bevorzugt die Stromspeichervorrichtung (6) über einen Hochsetzsteller (21) mit dem Gleichstromzwischenkreis (11) verbunden ist.

4. Elektrisches Fahrzeug nach einem der vorhergehenden Ansprüche, **dadurch gekennzeichnet, dass** zwischen Kontakteinrichtung (2a,2b) und Gleichstromzwischenkreis (11) ein Hauptschalter (3) angeordnet ist, bevorzugt zwischen Kontakteinrichtung (2a,2b) und Trennvorrichtung (5), insbesondere bevorzugt zwischen Stromaufnahmevorrichtung (2) und Trennvorrichtung (5).

5. Elektrisches Fahrzeug nach einem der vorhergehenden Ansprüche **dadurch gekennzeichnet, dass** die Stromaufnahmevorrichtung (2) eine Messvorrichtung für Strom umfasst.

6. Elektrisches Fahrzeug nach einem der vorhergehenden Ansprüche **dadurch gekennzeichnet, dass** eine Detektionsvorrichtung zum Detektieren von Stromversorgungsunterbrüchen ausgebildet ist, wobei durch die Detektionsvorrichtung das Vorhandensein eines Stromversorgungsunterbruches direkt detektierbar ist und/oder Positionsdaten eines Stromversorgungsunterbruches in der Detektionsvorrichtung verarbeitbar sind.

7. Verbund aus mehreren elektrischen Fahrzeugen, insbesondere Schienenfahrzeugen, wobei zumindest ein elektrisches Fahrzeug gemäss einem der vorhergehenden Ansprüche vorgesehen ist.

8. Verfahren zum Betreiben eines elektrischen Fahrzeugs, insbesondere eines Fahrzeuges gemäss einem der Ansprüche 1 bis 6, insbesondere beim Befahren von stromlosen Abschnitten einer externen Stromversorgung (1), wobei das elektrische Fahrzeug einen Gleichstromzwischenkreis (11) und eine Stromaufnahmevorrichtung (2) umfasst, umfassend die folgenden Schritte:
- Detektieren eines Stromunterbruches mit einer Detektionsvorrichtung,
- Unterbrechen der Stromversorgung in Richtung externe Stromversorgung (1) durch Öffnen einer Trennvorrichtung (5), wobei eine Stromversorgung von der externen Stromversorgung (1) zum Gleichstromzwischenkreis (11) unidirektional weiterhin möglich ist.

9. Verfahren nach Anspruch 8, **dadurch gekennzeichnet, dass** nach Detektieren des Stromunterbruches ein Spannungsniveau des Gleichstromzwischenkreises (11) auf ein gleiches oder höheres Spannungsniveau als das Spannungsniveau der externen Stromversorgung (1) angehoben wird, insbesondere auf eine maximal zulässige Spannung der externen Stromversorgung (1) .

10. Verfahren nach Anspruch 8 oder 9, **dadurch gekennzeichnet, dass** ein Wiedereinsetzen der externen Stromversorgung (1) durch die Detektionsvorrichtung detektiert wird und insbesondere das Spannungsniveau im Gleichstromzwischenkreis (11) nach Detektieren des Wiedereinsetzens der externen Stromversorgung (1) reduziert wird, bevorzugt auf ein Niveau unterhalb des Spannungsniveaus der externen Stromversorgung (1) wobei insbesondere die Trennvorrichtung (5) wieder geschlossen wird, so dass ein bidirektionaler Stromfluss möglich ist.

11. Verfahren nach einem der Ansprüche 9 bis 10, **dadurch gekennzeichnet, dass** das Anheben des Spannungsniveaus im Gleichstromzwischenkreis (11) durch Einspeisung von Bremsenergie der Traktionsmotoren (10) und/oder durch Einspeisung von Energie aus einem Energiespeicher (6) stattfindet.

12. Verfahren nach einem der Ansprüche 8 bis 11, **dadurch gekennzeichnet, dass** bei einem elektrischen Fahrzeug mit mehr als einer Stromabnahmevorrichtung (2), die Detektion des Stromunterbruches an der in Fahrtrichtung zuvorderst angeordneten Stromabnahmevorrichtung (2) stattfindet.

13. Verfahren nach einem der Ansprüche 8 bis 12, **dadurch gekennzeichnet, dass** eine Länge des Abschnittes des Stromunterbruches der externen Stromversorgung (1) bestimmt wird.

14. Verfahren nach einem der Ansprüche 8 bis 13, **dadurch gekennzeichnet, dass** ein Verbund nach Anspruch 7 oder ein Fahrzeug nach einem der Ansprüche 1 bis 6 zumindest zwei in Längsrichtung beabstandete Stromaufnahmevorrichtungen (2) umfasst und das Unterbrechen der Stromversorgung nur stattfindet, wenn die Länge des Abschnittes der externen Stromversorgung (1) ohne Stromversorgung länger ist, als der Abstand zwischen den beiden Stromaufnahmevorrichtungen (2).

15. Verfahren nach einem der Ansprüche 13 oder 14, **dadurch gekennzeichnet, dass** die Länge des Abschnittes des Stromunterbruches der externen Stromversorgung (1) an ein weiteres Fahrzeug gesendet wird und/oder gespeichert wird.
